# EUROPÄISCHE PATENTSCHRIFT

(11) **EP 3 122 168 B1**
(45) Veröffentlichungstag und Bekanntmachung des Hinweises auf die Patenterteilung: **16.05.2018**
(21) Anmeldenummer: 15716723.0
(22) Anmeldetag: 13.03.2015
(51) Int. Cl.: A01B 63/24

(54) **BODENBEARBEITUNGSGERÄT MIT STRIEGEL- ODER EINEBNUNGSVORRICHTUNG**
SOIL TILLING APPARATUS HAVING A COMBING OR LEVELING DEVICE
APPAREIL DE TRAVAIL DU SOL COMPRENANT UN DISPOSITIF D'ÉTRILLAGE ET D'APLANISSEMENT

(30) Priorität: 28.03.2014 DE 102014104417
(43) Veröffentlichungstag der Anmeldung: 01.02.2017
(73) Patentinhaber: Lemken GmbH & Co. KG, 46519 Alpen (DE)
(72) Erfinder: PAULESSEN, Georg, 41779 Viersen (DE)
(86) Internationale Anmeldenummer: PCT/DE2015/100104
(87) Internationale Veröffentlichungsnummer: WO 2015/144130

(56) Entgegenhaltungen:
- DE-A1-102008 059 144
- US-A- 4 615 286
- US-A1- 2003 132 013
- US-A1- 2012 073 844

## Beschreibung

Die Erfindung betrifft ein Bodenbearbeitungsgerät mit Striegel- und Einebnungsvorrichtung gemäß dem Oberbegriff des Patentanspruches 1.
Es sind Strohstriegel oder Schleppwerkzeuge bekannt, um nach der Ernte Erntegutreste und insbesondere liegengebliebenes Stroh auf dem Acker zu verteilen und die nachfolgende Bodenbearbeitung zu erleichtern und den Einmischprozess von Ernteresten in den Boden zu verbessern. Ein derartiger Strohstriegel wird in der deutschen Offenlegungsschrift DE 10 2008 059 144 A1 vorgeschlagen. Vorteilhaft ist eine Kombination verschiedener Werkzeuge, beispielsweise aus Striegel und nachfolgender Scheibenegge, um die Verteil- und Mischarbeit in einer Überfahrt über den Acker zu erledigen. Eine solche Kombinationen wird beispielsweise in der europäischen Patentschrift EP 1 529 430 B1 beschrieben. Durch die Länge des Gerätes wird im eingeklappten Zustand die vertikal zulässige Höhe im Straßenverkehr überschritten. Um die Bauhöhe des gesamten Gerätes vertikal zu begrenzen, kann die erste Zinkenreihe des Striegels über eine Steckverbindung manuell zurück geklappt werden. Eine weitere Patentanmeldung EP 1 508 264 A2 schlägt eine Scheibenegge mit vorgelagertem Strohstriegel vor. Um bei hohem Strohaufkommen ein Verstopfen des Striegels zu vermeiden, ist ein Regelsystem mit Erfassung der Strohmenge und danach geregelter Höheneinstellung des Striegels vorgesehen. Dieses Gerät bedarf einer aufwendigen und teuren Mess- und Regeltechnik.

Aufgabe der Erfindung ist es, kostengünstig und in einfacher Bauart ein Bodenbearbeitungsgerät in Kombination mit Striegel- oder Einebnungswerkzeugen bereit zustellen, deren Intensität oder Wirkung einstellbar ist und eine Verstopfungsgefahr durch Erntereste vermeidet oder vermindert. Diese Aufgabe wird durch die Merkmale des kennzeichnenden Teiles des Anspruches 1 gelöst.

Durch die zugleich in Intensität und Anstellwinkel zum Boden als auch im Abstand zueinander bzw. zum Bodenbearbeitungsgerät hin verstellbaren Striegelwerkzeuge bzw. die Werkzeuge tragenden Querträger wird mit zunehmender Striegelaggressivität auch der Werkzeugabstand vergrößert. Die gewünschte Stau- und Verteilwirkung der einzelnen Striegelwerkzeuge beeinflusst nicht mehr die nun in größerem Abstand nachfolgenden, weiteren Striegel oder Bodenbearbeitungswerkzeuge. Gerade bei geringerer Intensität oder kleinerem Anstellwinkel der Striegelwerkzeuge zum Boden ist jedoch ein geringerer Abstand der Werkzeuge zueinander wünschenswert, um eine bessere Verteilwirkung bei geringem Ernterestbesatz zu erreichen.

In einer besonderen Erfindungsgestaltung ist der Mechanismus als Scherenmechanismus in Art einer Scherenbewegung ausgeführt. Indem die Striegel tragenden Querträger als Drehachsen der Scherenkinematik fungieren bzw. mit den Lagerachsen der Scherenkinematik in Wirkverbindung stehen, wird eine gleichzeitige Winkelverstellung der Querachsen und der damit verbundenen Striegelwerkzeugen durch Drehung der Querträger als auch durch translatorische Bewegung der Querträger zueinander bzw. zu den nachfolgenden Bodenbearbeitungswerkzeugen auf einfache und kostengünstige Art realisiert.

In einer erweiterten Ausführung der Erfindung ist der die Querträger bewegende Mechanismus fremdkraftunterstützt ausgebildet. Durch die Verwendung von elastischen Elementen wie Federn, Fluidzylindern oder anderen Fremdkraft ausübenden Stellelementen ist ein Ausweichen oder Einstellen des Mechanismus bzw. der Striegelwerkzeuge bei Überlastung oder Auffahren auf ein Hindernis gewährleistet. Durch eine stufenlose oder in Schritten einstellbare, auf den Mechanismus wirkende Fremdkraft ist zudem ein weiterer Stellparameter für die Striegelintensität gegeben.

In einer komfortablen Version der Erfindung wirken ein oder mehrere Fluidzylinder auf den Mechanismus ein, wobei die Fluidzylinder mit einem pneumatischen oder hydropneumatischen Energiespeicher verbunden sind. Durch diese Bauart kann die Stellkraft der Fluidzylinder bequem beispielsweise über ein Steuerventil des ziehenden Fahrzeuges vom Fahrer eingestellt werden. Dabei kann die auf den Mechanismus einwirkende Zylinderkraft analog mit einer Druckanzeige überwacht oder mit einem Druckregler begrenzt werden. Genauso kann der Fluidzylinder in einer Wirkrichtung mit einem begrenzten Druck vorgespannt sein und die Striegelintensität vorgeben und mit einem höheren Druck in die andere Richtung die Striegelwirkung vollends aufheben, in dem der Striegel durch den Mechanismus in eine inaktive Position geschwenkt wird.

In einer verbesserten Bauart der Erfindung ist das Bodenbearbeitungsgerät mit einer Aushubvorrichtung versehen, wobei der Mechanismus mit der Aushubvorrichtung den Abstand der Querträger zu den Bodenbearbeitungswerkzeugen verändernd gekoppelt ist. Gerade bei aufgesattelten, mit einem Fahrwerk ausgestatteten Bodenbearbeitungsgeräten beeinflusst die Länge der Deichsel, mit welcher das Gerät an das Zugfahrzeug angehängt wird, die Wendigkeit des gesamten Gespanns. Wird bei Aushub des Gerätes der Abstand der Querträger zu den folgenden Bodenbearbeitungswerkzeugen auf einen minimalen Wert verringert, kann das Zugfahrzeug beim Wenden nahezu 90° zur Zugdeichsel einschlagen, ohne die Striegelwerkzeuge oder die Querträger zu berühren. Um diesen Abstand kann die Deichsellänge geringer gehalten werden und verbessert die Wendigkeit des gesamten Gespanns. Dabei kann die Kopplung zwischen Mechanismus einerseits und Fahrwerk, Deichsel oder Hubeinrichtung entweder mechanisch über ein Übertragungsgestänge, einen Seil- oder Kettenzug oder über eine hydraulische Kopplung verschiedener Stellmotoren oder Zylinder erfolgen.

In einer komfortablen Ausführung der Erfindung ist der Abstand der Querträger zu den Bodenbearbeitungswerkzeugen in einem minimalen Wert oder Wertebereich arretierbar ausgebildet. Durch Arretierung des Mechanismus oder der Querträger in minimaler Abstandsstellung zu den Bodenbearbeitungswerkzeugen können die Striegelwerkzeuge in nahezu wirkungsloser Stellung am Bodenbearbeitungsgerät verbleiben, wenn sie nicht benötigt werden, anstatt sie zu demontieren.

In einer weiteren Erfindungsform ist das Bodenbearbeitungsgerät mit einem Aufsattelfahrwerk und einer Anhängevorrichtung zur Kopplung des Bodenbearbeitungsgerätes an ein Zugfahrzeug versehen, wobei die Anhängevorrichtung mit einer Einrichtung ausgerüstet ist, welche die Lenkbewegungen zwischen Zugfahrzeug und Bodenbearbeitungsgerät erfasst und in eine Bewegung auf den Mechanismus überträgt und den Abstand der Querträger zu den Bodenbearbeitungswerkzeugen verändernd ausgebildet ist. Beispielsweise mit Lenkschub- oder Zugstangen oder anderen Vorrichtungen kann bei großen Einschlagwinkeln des lenkenden Zugfahrzeuges der Abstand der Striegelwerkzeuge zu den nachfolgenden Bodenbearbeitungswerkzeugen verringert werden, um eine Kollision mit dem Zugfahrzeug zu vermeiden. Wie bereits zuvor erwähnt, kann die Baulänge der Zugdeichsel und somit die Zuglänge des gesamten Gespanns aus Zugfahrzeug und Gerät verringert und dadurch die Wendigkeit verbessert werden. Bei einer optionalen Ausrüstung des Bodenbearbeitungsgerätes mit Striegel braucht keine längere Deichsel vorgehalten werden.

In einer erweiterten Form der Erfindung sind die Striegelwerkzeuge selbstfedernd oder mit einer Federvorrichtung ausgestattet auf den Querträgern befestigt. Treffen einzelne Striegelwerkzeuge auf ein Hindernis auf, können sie nach hinten ausweichen, ohne die Striegeleinrichtung in ihrer Gesamtheit zu verstellen. Genauso ist eine Einzelabsicherung der Querträger zum Mechanismus denkbar.

In einer anderen Erfindungsform sind die Striegelwerkzeuge als Zinkenwerkzeuge oder als breitflächige Einebnungswerkzeuge ausgebildet. Insbesondere mit robusten Zinkenformen oder mit breitflächigen Einebnungswerkzeugen kann auch eine Verteilung oder ein Einebnen von losem Boden erfolgen. Dies dient ebenfalls vorbereitend der nachfolgenden Bodenbearbeitung. Ebenso kann das Striegelwerkzeug auch eine durchgehende Planierschiene sein.

In einer weiteren Form der Erfindung ist der Mechanismus, die Querträger oder die Striegelwerkzeuge mit einer Rückfahrsicherung versehen, welche das Ausweichen der Striegel bei Bewegung oder Belastung entgegen der Fahrtrichtung bewirkt. Durch diese Einrichtung klappen die Striegelwerkzeuge bei Bodenkontakt und versehentlicher Rückwärtsbewegung des Bodenbearbeitungsgerätes weg und schieben keine Erntereste oder Stroh auf. Zugleich wird eine Überlastung der Werkzeuge und der Striegelverstellung verhindert. Die Rückfahrsicherung kann als Abschersicherung, mit Reibschluss- oder Federwirkung ausgebildet sein.

Die Erfindung zeichnet sich insbesondere dadurch aus, dass ein Mechanismus durch die Drehung der Querträger mit zunehmend steilerem Anstellwinkel der am Querträger befestigten Striegelwerkzeuge zum Boden eine Abstandsvergrößerung der Querträger und somit der Striegelwerkzeuge zueinander bzw. zu den nachfolgenden Bodenbearbeitungswerkzeugen bewirkt. Wird dieser Verstellmechanismus mit der Aushubeinrichtung des Bodenbearbeitungsgerätes kombiniert, verringert sich die Ausladung des am Bodenbearbeitungsgerät befestigten Striegels nach vorne und ermöglicht einen maximalen Lenkeinschlag des ziehenden Fahrzeugs bis nahe an die Zugdeichsel des Bodenbearbeitungsgerätes, ohne den Striegel beim Wenden zu beschädigen. Durch diese vorteilhafte Kombination wird der Fahrer in der Gerätebedienung entlastet und kann seine volle Aufmerksamkeit einem optimalen Verteil- und Arbeitsergebnis des Gerätes widmen.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 ein gezogenes Bodenbearbeitungsgerät mit vorgelagerter Striegelbaugruppe in perspektivischer Darstellung,
Fig.2 den vorderen Teil des Bodenbearbeitungsgerätes mit Deichselanhängung und Striegelbaugruppe,
Fig.3 einen seitlichen Querschnitt durch den Mechanismus der Striegelverstellung,
Fig. 4 den Mechanismus der Striegelbaugruppe in maximaler Ausladung bzw. Intensität und
Fig.5 den Mechanismus der Striegelbaugruppe in inaktiver Stellung bzw. Wende- oder Transportposition.

### Figurenbeschreibung

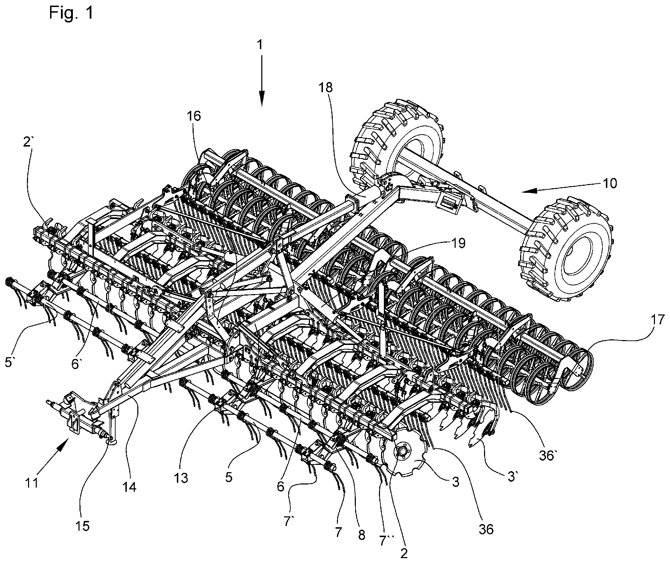

Figur 1 zeigt ein gezogenes aufgesatteltes Bodenbearbeitungsgerät 1, hier eine Kurzscheibenegge. Ebenso sind auch andere Gerätebauformen wie beispielsweise Zinkengrubber, aber auch angetriebene Kreiseleggen, Zinken- oder Fräsrotoren eingeschlossen. Das Bodenbearbeitungsgerät wird über die Anhängevorrichtung 11 an die Unterlenker eines nicht dargestellten Traktors als Zugmaschine gekoppelt. Die Unterlenker sind Bestandteil eines Dreipunktkrafthebers des Traktors, mit welchem das Gerät im vorderen Bereich ausgehoben werden kann. Die Kopplung an die Unterlenker erfolgt durch eine axial in Fahrtrichtung pendelnde Schienenwelle, welche in ihrer Bewegung seitlich durch Gummipuffer gegen Kippen des gesamten Gerätes begrenzt wird. Auf den hinteren Seiten ist die Anhängevorrichtung 11 über eine vertikale Drehachse dreh- oder schwenkbar zur Zugdeichsel gelagert. Ebenso kann die Anhängevorrichtung 11 als Dreipunktturm zur Kopplung an Ober- und Unterlenker der Dreipunkthydraulik des Traktors ausgeführt sein und ist dann kardanisch oder über ein Kugelgelenk an der Deichsel 14 befestigt. An ihrem anderen Ende ist die Deichsel 14 über einen Anbaubock 16 an dem Mittelrahmen 13 des Bodenbearbeitungsgerätes 1 angebracht. Ebenso kann die Deichsel 14 ohne die Anhängevorrichtung 11 mittels einer Zugöse oder einer Kugelkopfkupplung direkt in einer Anhängevorrichtung oder einem Zugpendel des Traktors angehängt werden. In diesem Fall wird die Deichsel 14 mit einem Hydraulikzylinder gegen den Anbaubock abgestützt, um das Gerät vorne auszuheben. Am hinteren Ende des Mittelrahmens 13 ist über eine Querachse vertikal schwenkbar das Fahrwerk 10 befestigt. Über einen Hydraulikzylinder 18 und weitere Verstrebungen kann das Fahrwerk gegenüber dem Mittelrahmen verschwenkt und somit das gesamte Gerät über den Boden 35 ausgehoben werden. In Arbeitsstellung wird das Fahrwerk 10 durch den Hydraulikzylinder 18 über den Boden 35 frei schwebend ausgehoben. In diesem Fall erfolgt die Tiefenführung des Bodenbearbeitungsgerätes 1 durch die höhenverstellbaren Druckwalzen 17. Ebenso ist ein direkter Anbau des Bodenbearbeitungsgerätes 1 an die Dreipunkthydraulik des Traktors möglich. In diesem Fall entfallen Anhängervorrichtung 11, Deichsel 14 und Fahrwerk 10. Stattdessen werden Ober und Unterlenker des Traktors direkt oben und unten an entsprechenden Koppelpunkten des Anbaubockes 16 befestigt.
Rechts und links des Mittelrahmens 13 erstrecken sich zwei Tragrahmen 2,2'. Die beiden Tragrahmen sind über eine Schwenkachse, welche parallel zur Fahrtrichtung läuft, schwenkbar zum Mittelrahmen gelagert und können durch einen oder mehrere Hydraulikzylinder von einer vertikalen Transportposition in eine horizontale Arbeitsposition geschwenkt werden. Ebenso sind eine starre Ausführung mit einem durchgehenden Tragrahmen als auch aus Segmenten bestehende Tragrahmen denkbar. Der Tragrahmen besteht hauptsächlich aus in Fahrtrichtung beabstandeten Tragrohren für die Anbringung der Bodenbearbeitungswerkzeuge 3,3' sowie erforderlichen Verbindungsteilen.
Im vorderen Bereich der Tragrahmen sind seitlich beabstandet zueinander rotierende Bodenbearbeitungswerkzeuge 3 in einer bestimmten Richtung befestigt. Im hinteren Bereich des Tragrahmens folgt ein weiterer Satz Bodenbearbeitungswerkzeuge 3' mit entgegengesetzter Wirkrichtung. Hinter den rotierenden Bodenbearbeitungswerkzeugen 3 folgen Prallwerkzeuge 36,36' zur optimalen Verteilung aufgeworfene Erde.
Vorne an den Tragrahmen 2,2' sind jeweils ein Mechanismen 8 in Form eines mehrfachen Scherengelenkes angebracht, welche die nachfolgend beschriebenen Querträger 5,6 und Striegelwerkzeuge 7,7' tragen.

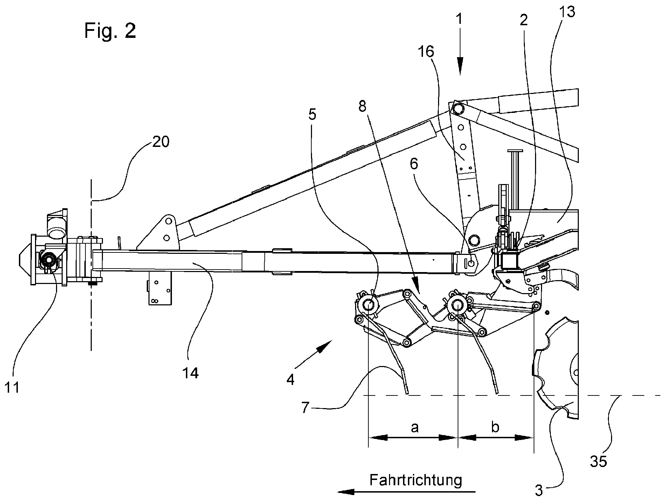

Figur 2 zeigt den vorderen Bereich des Bodenbearbeitungsgerätes 1 mit Deichselanbau 14 und Striegelbaugruppe. Sichtbar ist hier die vertikale Achse 20, welche die Anhängevorrichtung 11 relativ zur Deichsel 14 schwenkt und einen Lenkeinschlag des ziehenden Fahrzeuges zum Bodenbearbeitungsgerät 1 für Kurven- oder Wendefahrten ermöglicht. Am Tragrahmen 2, 2' ist der Mechanismus 8 mittels einer Flanschverbindung zu den jeweiligen Tragarmen 2, 2' befestigt. Insbesondere die Lagertaschen der nachfolgenden Bodenbearbeitungswerkzeuge 3 bieten sich als Befestigungseinheit an. Neben einer lösbaren Verbindung bieten sich aber auch geschweisste Befestigungskonsolen an. Die Anordnung von Mechanismus 8 kann einzeln als auch mehrfach nebeneinander erfolgen.

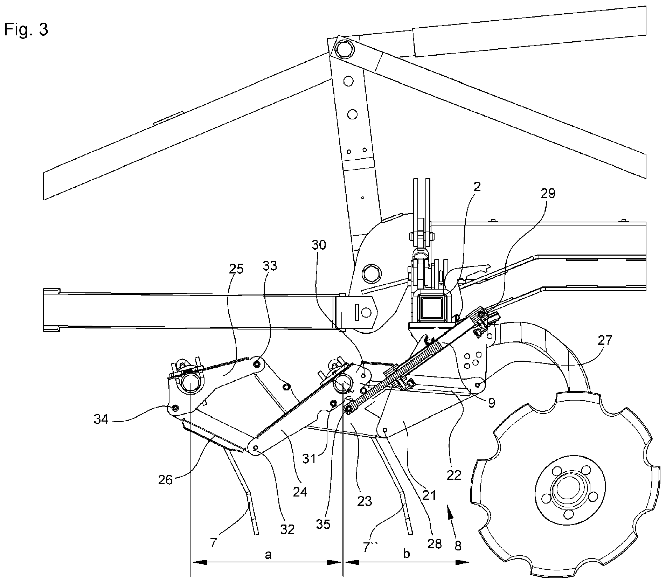

Fig.3 zeigt einen seitlichen Querschnitt durch den Mechanismus 8 der Striegelverstellung, wie bereits in Figur 2 dargestellt. Der Mechanismus 8 ist mit einer oder mehreren Konsolen 21 unterhalb des Tragrahmens 2 mittels einer Flanschverbindung befestigt. Mit der Konsole 21 ist ein erster Lenker 22 und ein Hebel 23 jeweils schwenkbar um die Achsen 27 und 28 verbunden. Zwischen der Konsole 21 und dem Hebel 23 ist ein Fluidzylinder an den Achsen 29 und 35 beweglich angeordnet. Wird der Fluidzylinder 9 auf seiner Kolbenseite mit Druck beaufschlagt, schwenkt er den Hebel 23 nach unten. Entgegengesetzt wirkt der Fluidzylinder, wenn seine Kolbenringseite mit Druck beaufschlagt wird. Über die Achsen 30 und 31 ist der hintere Werkzeuglenker 24 beweglich mit dem Lenker 22 und dem Hebel 23 verbunden. In dem hinteren Werkzeuglenker 24 ist ein Querträger 6 verdrehfest eingeklemmt. Ebenso ist eine formschlüssige Verbindung möglich. An dem Querträger 6 sind mehrere Striegelwerkzeuge 7" seitlich zueinander beabstandet formschlüssig auf den Querträgern mit einem robusten Federstecker befestigt. Durch Schwenken des Hebels 23 vollzieht der hintere Werkzeuglenker 24 und somit der daran befestigte Querträger 6 zugleich eine rotatorische wie translatorische Bewegung. Am jeweiligen vorderen Ende des Hebels 23 bzw. des hinteren Werkzeuglenkers 24 ist über die Achsen 32 und 33 ein vorderer Werkzeuglenker 25 und ein weiterer Lenker 26 beweglich verbunden. Um die Achse 34 können der vordere Werkzeuglenker 25 und der Lenker 26 zueinander drehen. In gleicher Weise wie am hinteren Werkzeuglenker 24 ist am vorderen Werkzeuglenker 25 ein weiterer Querträger 5 befestigt, an dem weitere Striegelwerkzeuge 7, wie zuvor beschriebenen, angeordnet sind. Alle Lagerstellen der vorgenannten Achsen können ein- oder mehrschnittig gelagert sein. Es versteht sich von selbst, dass der Mechanismus 8 als solcher in einem einzelnen Zusammenbau als auch mehrfach als solcher nebeneinander quer zur Fahrtrichtung an den jeweiligen Tragrahmen 2,2' angeordnet sein kann. Dies gilt auch für die einzelnen Hebel und Lenker 22-26 sowie die Lagerkonsole 21. Auch eine aufgelöste Bauweise, wobei einzelne Komponenten quer zur Fahrtrichtung beabstandet angeordnet sind, ist denkbar. Mit Verschwenken des hinteren Hebels 23 durch den Fluidzylinder 9 wird der vordere Werkzeuglenker 25 ebenfalls translatorisch und zugleich rotatorisch bewegt. Der Querträger 5 und die Striegelwerkzeuge 7 führen diese Bewegung ebenfalls aus. Durch diese kinematische Anordnung der vorgenannten Lenker und Hebel verdrehen sich die Querträger 5,6 in annähernd gleichem Winkel um ihre eigene Achse quer zur Fahrtrichtung. Mit Verdrehung der Querträger 5,6 ändert sich zeitgleich und kontinuierlich der Abstand a der Querträger 5,6 zueinander bzw. der Abstand b des hinteren Querträgers 6 zu den Bodenbearbeitungswerkzeugen 3.
Je höher die Kraft ist, mit dem der Fluidzylinder auf den Hebel 23 drückt, desto steiler stellen sich die Striegelwerkzeuge im Winkel zum Boden 35 an und erhöhen ihre Striegelintensität. Zugleich vergrößern sich die Abstände a und b und in dessen Folge der Abstand der Kontaktpunkte der jeweiligen Werkzeuge auf den Boden 35. Erzeugt der Fluidzylinder nun eine Zugkraft auf den Hebel, faltet sich der ganze Mechanismus 8 in eine minimale Länge in der Nähe des Tragrahmens 2 zusammen. Die Abstände a und b beziehungsweise die Summe der Abstände a und b werden minimiert und die Striegelwerkzeuge schwenken in eine kompakte Außerbetriebstellung.

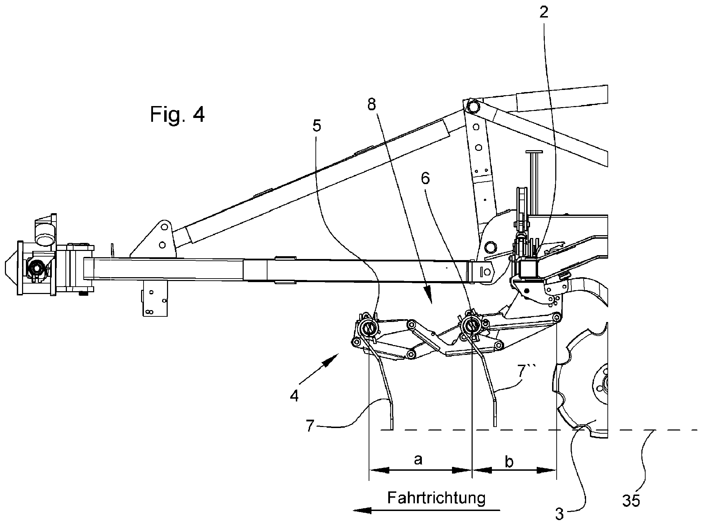

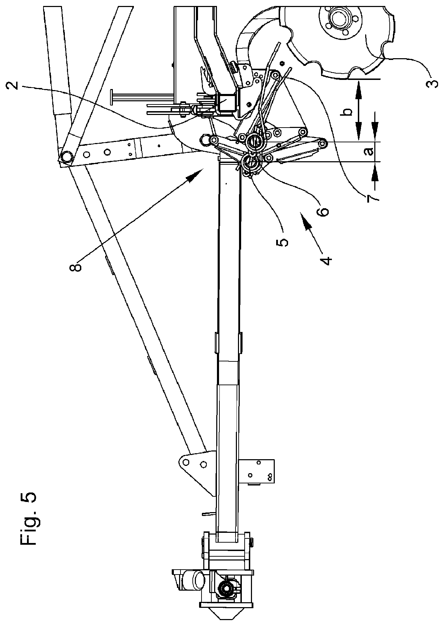

Fig. 4 zeigt den Mechanismus der Striegelbaugruppe in Seitenansicht in maximalem Ausladung bzw. Intensität. Die Hebel und Lenker 22-26 des Mechanismus 8 sind soweit flach nach vorne gestreckt, dass sich noch eine hinreichende Stabilität des Mechanismus 8 insbesondere gegen vertikale Belastung ergibt. Erkennbar ist die annähernd senkrechte Stellung der Striegelwerkzeuge zum Boden 35 sowie die max. Abstände a/b der Querträger 5 und 6 zueinander bzw. zum den nachfolgenden Bodenbearbeitungswerkzeugen 3. Die Abstände a/b der Querträger 5 und 6 zueinander bzw. zu den nachfolgenden Bodenbearbeitungswerkzeugen 3 entsprechen annähernd den gleichen Abständen in Fahrtrichtung, mit denen die unteren Enden der Striegelwerkzeuge 7, 7" zueinander oder zu den Bodenbearbeitungswerkzeugen 3 beabstandet sind. Fig.5 zeigt den Mechanismus 8 der Striegel- oder Einebnungsvorrichtung 4 in inaktiver Stellung bzw. Wende- oder Transportposition. Durch die kürzeste Ausladung der Striegel- oder Einebnungsvorrichtung 4, welche aus der Summe der Abstände a und b gebildet wird, ist ein maximaler Lenkeinschlag des ziehenden Fahrzeuges zur Zugdeichsel des Bodenbearbeitungsgerätes möglich, ohne mit der Außenkontur, insbesondere der Bereifung des Zugfahrzeuges Komponenten der Striegel- oder Einebnungsvorrichtung 4 zu berühren.

Es folgt ein Blatt mit Zeichnung.

### BEZUGSZEICHENLISTE

| | |
|---|---|
| 1 | Bodenbearbeitungsgerät |
| 2 | Tragrahmen |
| 3 | Bodenbearbeitungswerkzeuge |
| 4 | Striegel- oder Einebnungsvorrichtung |
| 5 | Querträger |
| 6 | Querträger |
| 7 | Striegelwerkzeuge |
| 8 | Mechanismus |
| 9 | Fluidzylinder |
| 10 | Fahrwerk |
| 11 | Anhängevorrichtung |
| 12 | Aushubvorrichtung |
| 13 | Mittelrahmen |
| 14 | Deichsel |
| 15 | Schienenwelle |
| 16 | Anbaubock |
| 17 | Druckwalzen |
| 18 | Hydraulikzylinder |
| 19 | Hydraulikzylinder |
| 20 | Achse |
| 21 | Lagerkonsole |
| 22 | Lenker |
| 23 | Hebel |
| 24 | Hinterer Werkzeuglenker |
| 25 | Vorderer Werkzeuglenker |
| 26 | Lenker |
| 27-34 | Achse |
| 35 | Boden, Bodenoberfläche |
| 36 | Prallwerkzeuge |

## Patentansprüche

1. Bodenbearbeitungsgerät (1), welches an einen Traktor als Zugmaschine zum Antrieb oder zur Fortbewegung koppelbar ist, mit einem oder mehreren Tragrahmen (2,2') und daran befestigten Bodenbearbeitungswerkzeugen (3,3'), welche vorzugsweise seitlich zur Fahrtrichtung zueinander beabstandet in einer oder mehreren Reihen angeordnet sind, mit einer Striegel- oder Einebnungsvorrichtung (4), welche den Bodenbearbeitungswerkzeugen (3) in einem Abstand (b) in Fahrtrichtung vorgelagert ist und aus einem oder mehreren beweglich angeordneten Querträgern (5,6) besteht, wobei Striegelwerkzeuge (7) seitlich beabstandet zueinander an einen oder mehreren Querträgern (5,6) befestigt sind, wobei der eine oder mehrere Querträger (5,6) rotatorisch durch ihre Bewegung die Striegelintensität oder den Anstellwinkel der Striegelwerkzeuge zum Boden (35) verändernd in einem Mechanismus (8) angelenkt sind,
**dadurch gekennzeichnet,**
**dass** der Mechanismus (8) ausgebildet ist, in seiner Bewegung zugleich den Abstand (a,b) von mehreren Querträger (5,6) zueinander oder von einem Querträger (5, 6) zu den Bodenbearbeitungswerkzeugen (3) vorzugsweise in Fahrtrichtung zu verstellen.

2. Bodenbearbeitungsgerät nach Anspruch 1,
**dadurch gekennzeichnet,**
**dass** der Mechanismus (8) als Scherenmechanismus in Art einer Scherenbewegung ausgeführt ist.

3. Bodenbearbeitungsgerät nach Anspruch 1 oder 2,
**dadurch gekennzeichnet,**
**dass** der Mechanismus fremdkraftunterstützt die Querträger (5,6) bewegend ausgebildet ist.

4. Bodenbearbeitungsgerät nach vorstehenden Ansprüchen,
**dadurch gekennzeichnet,**
**dass** ein oder mehrere Fluidzylinder (9) auf den Mechanismus (8) einwirken, wobei die Fluidzylinder (9) mit zumindest einem pneumatischen oder hydropneumatischen Energiespeicher verbunden sind.

5. Bodenbearbeitungsgerät nach vorstehenden Ansprüchen,
**dadurch gekennzeichnet,**
**dass** das Bodenbearbeitungsgerät (1) mit einer Aushubvorrichtung (12) versehen ist, wobei der Mechanismus (8) mit der Aushubvorrichtung (12) den Abstand (a,b) der Querträger (5,6) zu den Bodenbearbeitungswerkzeugen (7) verändernd gekoppelt ist.

6. Bodenbearbeitungsgerät nach vorstehenden Ansprüchen,
**dadurch gekennzeichnet,**
**dass** der Abstand (a,b) der Querträger zu den Bodenbearbeitungswerkzeugen (7) in einem minimalen Wert oder Wertebereich arretierbar ausgebildet ist.

7. Bodenbearbeitungsgerät nach vorstehenden Ansprüchen,
**dadurch gekennzeichnet,**
**dass** das Bodenbearbeitungsgerät (1) mit einem Fahrwerk (10) und einer Anhängevorrichtung (11) zur Kopplung des Bodenbearbeitungsgerätes (1) an ein Zugfahrzeug versehen ist, wobei die Anhängevorrichtung (11) mit einer Einrichtung ausgerüstet ist, welche die Lenkbewegungen zwischen Zugfahrzeug und Bodenbearbeitungsgerät (1) erfasst und in eine Bewegung auf den Mechanismus (8) überträgt und den Abstand (a,b) der Querträger (5,6) zu den Bodenbearbeitungswerkzeugen (7) verändernd ausgebildet ist.

8. Bodenbearbeitungsgerät nach vorstehenden Ansprüchen,
**dadurch gekennzeichnet,**
**dass** die Striegelwerkzeuge (7) selbstfedernd oder mit einer Federvorrichtung ausgestattet auf den Querträgern (5,6) befestigt sind.

9. Bodenbearbeitungsgerät nach vorstehenden Ansprüchen,
**dadurch gekennzeichnet,**
**dass** die Striegelwerkzeuge (7) als Zinkenwerkzeuge oder als breitflächige Einebnungswerkzeuge ausgebildet sind.

10. Bodenbearbeitungsgerät nach vorstehenden Ansprüchen,
**dadurch gekennzeichnet,**
**dass** der Mechanismus (8), die Querträger (5,6) oder die Striegelwerkzeuge (7) mit einer Rückfahrsicherung versehen sind, welche das Ausweichen der Striegel bei Bewegung oder Belastung entgegen der Fahrtrichtung bewirkt.

## Claims

1. A soil tilling apparatus (1) to be coupled to and moved or driven by a tractor as a towing vehicle, with one or several support frames (2, 2') and soil tilling tools (3, 3') mounted thereon, which are arranged preferably in one or several rows spaced apart from each other sideways to the driving direction, with a grooming or leveling device (4), which is in front of the soil tilling tools (3) at a distance (b) in the driving direction and consists of one or several crossbeams (5, 6) arranged movably, wherein grooming tools (7) are mounted laterally spaced apart from each other on one or more crossbeams (5,6), wherein the one or more cross beams (5,6) are hinged in a mechanism (8) in a rotatory manner by their movement changing the grooming intensity or the working angle of the grooming tools to the ground (35),
**characterized in**
**that** the mechanism (8) is designed in its movement at the same time changing the distance (a, b) of the cross teams (5,6) to each other or to the soil tilling tools (3) preferably 15 in the driving direction.

2. A soil tilling apparatus according to Claim 1,
**characterized in**
**that** the mechanism (8) is designed as a scissor mechanism in the manner of a scissor movement.

3. A soil tilling apparatus according to Claim 1 or 2,
**characterized in**
**that** the mechanism is designed powered by an external force moving the crossbeams (5,6).

4. A soil tilling apparatus according to the preceding claims,
**characterized in**
**that** one or several fluid cylinders (9) act on the mechanism (8), wherein the fluid cylinders (9) are connected to at least one pneumatic or hydro-pneumatic energy storage.

5. A soil tilling apparatus according to the preceding claims,
**characterized in**
**that** the soil tilling apparatus (1) is provided with a lifting device (12), wherein the mechanism (8) is coupled with the lifting device (12) changing the distance (a, b) of the cross beams (5, 6) to the soil tilling tools (7).

6. A soil tilling apparatus according to the preceding claims,
**characterized in**
**that** the distance (a, b) of the crossbeams to the soil tilling tools (7) is designed to be lockable at a minimal value or value range.

7. A soil tilling apparatus according to the preceding claims,
**characterized in**
**that** the soil tilling apparatus (1) is provided with a chassis (10) and a towing hitch (11) for coupling the soil tilling apparatus (1) to a towing vehicle, wherein the towing hitch (11) is equipped with a device, which detects the steering movements between towing vehicle and soil tilling apparatus (1) and transfers them into a movement on the mechanism (8) and is designed changing the distance (a, b) of the cross beams (5, 6) to the soil tilling 20 tools (7).

8. A soil tilling apparatus according to the preceding claims,
**characterized in**
**that** the grooming tools (7) are mounted on the cross beams (5, 6) self-resiliently or equipped with a spring device.

9. A soil tilling apparatus according to the preceding claims,
**characterized in**
**that** the grooming tools (7) are designed as tine tools or as wide surface leveling tools.

10. A soil tilling apparatus according to the preceding claims, 5
**characterized in**
**that** the mechanism (b), the crossbeams (5, 6) or the grooming tools (7) are provided with a reversing lock, which brings about the evasion of the comb upon movement or stress contrary to the driving direction.

## Revendications

1. Appareil de travail du sol (1), lequel peut être couplé à un tracteur en tant que machine de traction pour l'entraînement ou pour la locomotion, avec un ou plusieurs cadres porteurs (2, 2') et des outils de travail du sol (3, 3') qui y sont fixés, lesquels sont disposés de préférence latéralement par rapport au sens de la marche de façon espacée les uns des autres en une ou plusieurs rangées, avec un dispositif d'étrillage ou d'aplanissement (4), lequel est placé à une distance (b) avant les outils de travail du sol (3) dans le sens de la marche et se compose d'une ou de plusieurs traverses (5, 6) disposées de façon mobile, des outils d'étrillage (7) étant fixés de façon espacée latéralement les uns des autres sur une ou plusieurs traverses (5, 6), la ou plusieurs traverses (5, 6) étant articulées en rotation dans un mécanisme (8) en modifiant par leur mouvement l'intensité de l'étrillage ou l'angle d'attaque des outils d'étrillage par rapport au sol (35),
**caractérisé en ce que**
le mécanisme (8) est constitué pour, dans son mouvement, modifier en même temps la distance (a, b) de plusieurs traverses (5, 6) les unes par rapport aux autres ou d'une traverse (5, 6) par rapport aux outils de travail du sol (3) de préférence dans le sens de la marche.

2. Appareil de travail du sol selon la revendication 1,
**caractérisé en ce que**
le mécanisme (8) est réalisé en tant que mécanisme de ciseaux à la façon d'un mouvement de ciseaux.

3. Appareil de travail du sol selon la revendication 1 ou 2,
**caractérisé en ce que**
le mécanisme est constitué en déplaçant les traverses (5, 6) avec l'assistance d'une force extérieure.

4. Appareil de travail du sol selon des revendications précédentes,
**caractérisé en ce que**
qu'un ou plusieurs cylindres hydrauliques (9) agissent sur le mécanisme (8), les cylindres hydrauliques (9) étant raccordés à au moins un accumulateur d'énergie pneumatique ou hydropneumatique.

5. Appareil de travail du sol selon des revendications précédentes,
**caractérisé en ce que**
l'appareil de travail du sol (1) est muni d'un dispositif de levage (12), le mécanisme (8) étant couplé au dispositif de levage (12) en modifiant la distance (a, b) entre les traverses (5, 6) et les outils de travail du sol (7).

6. Appareil de travail du sol selon des revendications précédentes,
**caractérisé en ce que**
la distance (a, b) entre les traverses et les outils de travail du sol (7) est constituée de façon à pouvoir être bloquée dans une valeur minimale ou dans une plage de valeurs.

7. Appareil de travail du sol selon des revendications précédentes,
**caractérisé en ce que**
l'appareil de travail du sol (1) est muni d'un châssis (10) et d'un dispositif d'attelage (11) pour le couplage de l'appareil de travail du sol (1) à un véhicule tracteur, le dispositif d'attelage (11) étant équipé d'un système, lequel détecte les mouvements de braquage entre le véhicule tracteur et l'appareil de travail du sol (1) et les convertit en un mouvement sur le mécanisme (8) et est constitué en modifiant la distance (a, b) entre les traverses (5, 6) et les outils de travail du sol (7).

8. Appareil de travail du sol selon des revendications précédentes,
**caractérisé en ce que**
les outils d'étrillage (7) ont une élasticité propre ou sont fixés sur les traverses (5, 6) en étant munis d'un dispositif de ressort.

9. Appareil de travail du sol selon des revendications précédentes,
**caractérisé en ce que**
les outils d'étrillage (7) sont constitués en tant qu'outils à dents ou en tant qu'outils d'aplanissement à surface large.

10. Appareil de travail du sol selon des revendications précédentes,
**caractérisé en ce que**
le mécanisme (8), les traverses (5, 6) ou les outils d'étrillage (7) sont munis d'une sécurité de marche arrière, laquelle provoque l'effacement des étrilles lors d'un mouvement ou d'une contrainte opposée au sens de la marche.
